(19) **Europäisches Patentamt / European Patent Office / Office européen des brevets**

(11) **EP 3 237 738 B1**

(12) **FASCICULE DE BREVET EUROPEEN**

(45) Date de publication et mention de la délivrance du brevet:
**21.08.2024 Bulletin 2024/34**

(21) Numéro de dépôt: **15823356.9**

(22) Date de dépôt: **18.12.2015**

(51) Classification Internationale des Brevets (IPC):
**F02D 41/02** *(2006.01)* **F02D 41/14** *(2006.01)*

(52) Classification Coopérative des Brevets (CPC):
**F02D 41/0275; F02D 41/1454;** F02D 2200/0806

(86) Numéro de dépôt international:
**PCT/FR2015/053627**

(87) Numéro de publication internationale:
**WO 2016/102843 (30.06.2016 Gazette 2016/26)**

(54) **PROCÉDÉ DE PURGE D'UN PIÈGE A OXYDES D'AZOTE**

VERFAHREN ZUR REGENERATION EINER STICKOXIDFALLE

METHOD FOR PURGING A NITROGEN OXIDES TRAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463120**

(43) Date de publication de la demande:
**01.11.2017 Bulletin 2017/44**

(73) Titulaire: **NEW H POWERTRAIN HOLDING, S.L.U.**
**47008 Valladolid (ES)**

(72) Inventeur: **TUNETIER, Christophe**
**91610 Ballancourt sur Essonne (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A2- 1 209 332      WO-A1-2006/003341**
**DE-C1- 19 844 082     DE-T2- 69 913 084**

**Description**

DOMAINE TECHNIQUE DE L'INVENTION

L'invention se situe dans le domaine du post-traitement des émissions polluantes à l'échappement de moteurs à combustion interne fonctionnant habituellement en mélange pauvre, notamment les moteurs diesel équipant des véhicules automobiles.

Elle concerne plus particulièrement un procédé de purge d'un piège à oxydes d'azote ($NO_x$) équipant la ligne d'échappement de tels moteurs.

ETAT DE LA TECHNIQUE

Les moteurs modernes fonctionnant habituellement en mélange pauvre, c'est-à-dire avec un rapport de la quantité de carburant sur la quantité d'air inférieur au rapport stoechiométrique, sont souvent équipés d'une ligne d'échappement comportant un piège catalytique à oxydes d'azote ($NO_x$) afin de limiter les rejets dans l'atmosphère de cette espèce chimique nocive à la santé et à l'environnement.

De manière connue, un tel piège fonctionne de manière séquentielle. Pendant le fonctionnement habituel du moteur en mélange pauvre, il stocke les molécules d'oxydes d'azote provenant de la combustion dans le moteur avec une certaine efficacité, dite efficacité de stockage, c'est-à-dire dans une certaine proportion, le reste des molécules traversant le piège sans y être retenues et étant directement rejetées dans l'atmosphère.

Dans un deuxième temps, typiquement lorsque la masse d'oxydes d'azote stockée dans le piège atteint un certain seuil, un calculateur du moteur déclenche le basculement de ce dernier dans un mode de fonctionnement en mélange riche, c'est-à-dire avec un excès de carburant par rapport à l'air, comparativement aux conditions stoechiométriques. La richesse est alors généralement comprise entre 1,03 et 1,10 , par exemple 1,04 en moyenne. Le piège est alors purgé : les molécules de $NO_x$ qui ont été stockées dans le piège pendant la phase de fonctionnement en mélange pauvre sont réduites en espèces inoffensives sous l'action du carburant acheminé vers le piège avec les gaz de combustion du moteur. Les gaz qui résultent de cette réduction sont évacués dans l'atmosphère extérieure.

La purge est généralement arrêtée lorsque le signal de richesse délivré par une sonde à oxygène montée à la sortie du piège bascule d'une valeur de richesse inférieure à 1 à une valeur de richesse supérieure à 1, par exemple lorsque la valeur de ladite richesse rejoint la valeur de la richesse du mélange air/carburant pendant la purge, par exemple 1,04. On estime en effet que le basculement du signal de richesse de la sonde aval indique l'épuisement de la masse d'oxydes d'azote stockée dans le piège, le carburant acheminé à l'entrée du piège passant alors directement à la sortie du piège.

On connaît de nombreux exemples de tels procédés. Par exemple, la publication FR-A1-2916017 décrit un procédé dans lequel, dans le but de surveiller l'état de fonctionnement d'un piège à oxydes d'azote, on réalise une étape de détermination de la quantité d'oxydes d'azote stockée dans le piège pendant son fonctionnement en mélange pauvre, de préférence par modélisation à partir des caractéristiques du piège, des températures issues d'un modèle thermique de chaque réacteur individuel du piège et du débit massique des gaz d'échappement, et on réalise également une étape de calcul d'une quantité de réducteurs utilisés pendant une purge du piège. La purge débute lorsque la masse d'oxydes d'azote atteint un seuil, la publication précisant que le piège stocke les oxydes d'azote tant que la masse est inférieure à un seuil. L'instant de la fin de la purge, qui n'est pas déterminé de manière univoque dans cette publication, peut correspondre au basculement de richesse d'une sonde à oxygène aval du piège, en référence au document FR-A1-2866926 qui y est cité.

Les pièges à oxydes d'azote permettent aux véhicules automobiles qui en sont munis de respecter la législation des pays dans lesquels ils circulent. Ces législations fixent en effet des limites maximales aux différentes quantités d'espèces polluantes émises dans les gaz d'échappement. Par exemple, la législation européenne dite « euro6 » impose à tout véhicule particulier équipé d'un moteur diesel de ne pas rejeter plus de 80 milligrammes de $NO_x$ par kilomètre parcouru sur le cycle dit NEDC.

On comprend de ce qui précède que le respect d'une telle norme dépend des quantités de $NO_x$ émises par le moteur dans ses gaz de combustion et de l'efficacité de stockage du piège à oxydes d'azote. Par exemple, pour un moteur diesel émettant dans ses gaz de combustion environ 130 milligrammes de $NO_x$ par kilomètre parcouru, l'efficacité de stockage du piège à oxydes d'azote doit être au moins égale à environ 40% pour que le véhicule ne rejette pas plus de 80 milligrammes de $NO_x$ par kilomètre parcouru.

Il est connu que l'efficacité de stockage dépend d'un ensemble de paramètres comprenant au moins : la température $\theta$ du piège ; le débit d'échappement $Q_{ech}$ (débit de gaz de combustion) traversant le piège ; la concentration en oxydes d'azote dans les gaz de combustion $[NO_x]_{in}$ entrant dans le piège ; la richesse r du mélange air/carburant ; et, la masse d'oxydes d'azote $M_{NO_x}$ déjà stockée dans le piège.

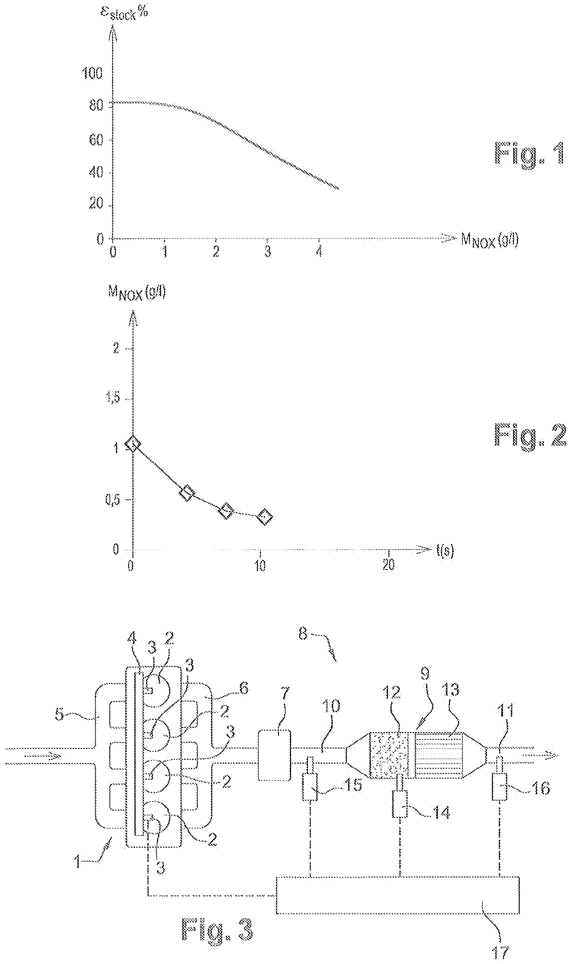

On a représenté sur la figure 1 une courbe qui indique la variation de l'efficacité de stockage $\varepsilon_{stock}$ (en pour-

centage) d'un piège à oxydes d'azote en fonction de la masse d'oxydes d'azote $M_{NO_x}$ stockée dans le piège (exprimée selon un usage connu en grammes par litre plutôt qu'en grammes, la masse étant ramenée au volume du piège), les autres paramètres étant constants par ailleurs. On peut déduire de cette figure que, pour assurer au piège une efficacité de stockage $\varepsilon_{stock}$ au moins égale à 40%, il convient de limiter la masse d'oxydes d'azote $M_{NO_x}$ stockée dans le piège à environ 4 g/l, ce qui se rapproche de la capacité de stockage maximale des pièges actuellement disponibles. Le calculateur du moteur peut donc être programmé pour détecter un besoin de purge lorsque la masse de $NO_x$ dans le piège atteint 4 g/l, ce qui se présente à des intervalles de temps assez espacés, et on peut exploiter pratiquement toute la capacité du piège.

Avec la sévérité toujours accrue des législations futures, les quantités de $NO_x$ émises par les moteurs à la source (dans les gaz de combustion) ne pouvant pas être beaucoup réduites, il devient nécessaire d'augmenter considérablement l'efficacité de stockage des pièges à oxydes d'azote. Plus précisément, il faut envisager de maintenir en permanence le catalyseur dans une zone d'efficacité ne s'écartant pas de l'efficacité maximale, par exemple au moins 80%. En référence à la figure 1, on peut atteindre et maintenir une telle valeur en gardant constamment la masse d'oxydes d'azote $M_{NO_x}$ stockée dans le piège en dessous de 1 g/l, à une valeur de l'ordre de 0,3 à 0,5 g/l. En d'autres termes, le calculateur du moteur doit alors être programmé pour détecter un besoin de purge lorsque la masse de $NO_x$ dans le piège atteint seulement 0,3 ou 0,5 g/l, ce qui entraîne une augmentation très nette du besoin de déclenchement des purges par rapport à la situation connue avec les législations actuelles.

Les procédés connus de purge ne sont pas assez fiables pour garantir l'atteinte d'un tel objectif d'efficacité, pour plusieurs raisons qui se cumulent entre elles.

Une raison très importante est que l'arrêt d'une purge sur un basculement du signal d'une sonde aval du piège à une valeur riche ne garantit pas que le piège soit complètement vide. Sur la figure 2, on a représenté l'évolution temporelle de la masse d'oxydes d'azote dans un piège pendant une purge, pour un piège contenant par exemple 1 g/l d'oxydes d'azote au début de la purge. La purge s'arrête après 10 secondes lorsqu'une condition de basculement de la sonde à oxygène est remplie. On constate qu'à la fin de la purge, le piège contient encore entre 0,2 et 0,3 g/l d'oxydes d'azote. Des mesures similaires précises réalisées pour des pièges contenant des masses initiales de $NO_x$ plus élevées, ont montré que le piège peut conserver jusqu'à environ un tiers de sa masse initiale de $NO_x$ en fin de purge selon la même condition de fin de purge, par exemple environ 1,5 g/l pour une masse initiale de 4 g/l. D'une manière générale, plus la masse initiale de $NO_x$ est élevée en début de purge, plus la masse résiduelle l'est en fin de purge, et plus elle l'est en proportion par rapport à la masse initiale.

L'utilisation d'une condition de basculement de la sonde à oxygène pour arrêter la purge a plusieurs conséquences. D'une part, l'efficacité maximale du piège n'est pas rétablie complètement à la fin de la purge, ce qui augmente en soi les émissions polluantes du véhicule, et d'autre part, elle fausse la détermination de la masse d'oxydes d'azote qui s'accumule dans le piège pendant le fonctionnement du moteur en mélange pauvre, comme on le montre maintenant sur un exemple :

La masse d'oxydes d'azote est généralement déterminée par un modèle d'accumulation itératif, par exemple en initialisant la masse à zéro à la fin d'une purge, puis en ajoutant à chaque pas de temps $\Delta t$ à une masse d'oxydes d'azote $M_{NO_x}$ (t) connue à un instant t une masse d'oxydes d'azote supplémentaire $\Delta M_{NO_x}$ accumulée pendant le pas de temps $\Delta t$. Cette masse supplémentaire $\Delta M_{NO_x}$ peut se calculer comme le produit du débit d'oxydes d'azote $Q_{NO_x}$ par le pas de temps $\Delta t$, multiplié par l'efficacité de stockage $\varepsilon_{stock}$ (t) du piège qui représente la proportion du débit d'azote entrant qui est effectivement retenue dans le piège. Le débit d'oxydes d'azote $Q_{NO_x}$ est égal au produit du débit de gaz d'échappement $Q_{ech}$ et de la concentration en oxydes d'azote $[NO_x]_{in}$ dans les gaz. En d'autres termes, la masse d'oxydes d'azote dans le piège peut se calculer de manière itérative par l'équation suivante :

$$\text{(Eq.1)} \quad M_{NO_x}\,(t+\Delta t) = M_{NO_x}\,(t) + [\,Q_{ech}(t) * [NO_x]_{in}\,(t) * \varepsilon_{stock}\,(t)\,]* \Delta t$$

, équation dans laquelle :

- t et t+$\Delta t$ désignent symboliquement deux instants successifs de calcul séparés d'un pas de temps $\Delta t$ ;
- $M_{NO_x}$ (t) et $M_{NO_x}$ (t+$\Delta t$) désignent respectivement la masse d'oxydes d'azote aux instants successifs t et t+$\Delta t$ ;
- $Q_{ech}(t)$ désigne le débit des gaz d'échappement à l'instant t ;
- $[NO_x]_{in}$ (t) désigne la concentration en oxydes d'azote dans les gaz à l'instant t ; et,
- $\varepsilon_{stock}$ (t) désigne l'efficacité de stockage à l'instant t.

Comme indiqué plus haut, l'efficacité de stockage $\varepsilon_{stock}$ (t) dépend elle-même de la masse d'oxydes d'azote $M_{NO_x}$ déjà stockée dans le piège.

On comprend donc de l'équation 1 que la valeur de la masse d'oxydes d'azote $M_{NO_x}(t)$ à l'instant t influe sur la détermination de la masse $M_{NO_x}(t+ \Delta t)$ au pas de calcul suivant, non seulement directement en tant qu'un des termes de la somme, mais aussi une deuxième fois par l'estimation de l'efficacité de stockage $\varepsilon_{stock}$ (t) qui sert à déterminer la masse d'oxydes d'azote supplémentaire $\Delta M_{NOx}$ accumulée pendant le pas de temps $\Delta$t. Le calcul étant itératif, il est très sensible aux conditions initiales, c'est-à-dire à la valeur initiale de la masse $M_{NOx}$(t=0), qui n'est pas nulle à la fin d'une purge arrêtée sur un critère de basculement de richesse d'une sonde aval, et à la valeur initiale de l'efficacité $\varepsilon_{stock}$ (t=0), qui dépend elle-même de la masse initiale. Une faible erreur sur ces valeurs initiales peut se traduire à la fin du calcul par une grande erreur sur la masse totale, car toutes les étapes de calcul sont entachées d'erreur.

On notera aussi que les dispersions normales entre moteurs entraînent des variations de concentration en oxydes d'azote $[NO_x]_{in}$ (t) et d'efficacité de stockage $\varepsilon_{stock}$ (t) qui contribuent aussi à rendre le modèle de détermination de la masse d'oxydes d'azote imprécis.

Il en résulte que le déclenchement de la purge est également imprécis. La purge démarre lorsque la masse d'oxydes d'azote $[NO_x]_{in}$ estimée atteint un seuil prédéterminé. Si la masse stockée réelle est supérieure à la masse stockée estimée, par exemple à cause d'une première erreur sur la masse initiale $M_{NOx}$(t=0), c'est-à-dire la masse encore présente dans le piège à la fin de la purge précédente, il en résulte que la masse restant dans le piège à la fin de la purge suivante est encore plus grande qu'à la fin de la purge précédente. On fera donc une estimation encore plus erronée de la masse initiale servant au calcul de la masse stockée lors du cycle de fonctionnement suivant de stockage des oxydes d'azote, et ainsi de suite. De proche en proche, comme la demanderesse l'a constaté avec l'application des procédés de purges connus, un piège à oxydes d'azote peut finir par contenir une masse de 4 g/l d'oxydes dans la réalité alors que l'estimation n'excède pas 0,5 g/l à chaque cycle successif. L'efficacité de stockage du piège est alors durablement dégradée, et le véhicule rejette trop de polluants dans l'atmosphère.

On comprend de ce qui précède que les procédés de purge connus sont fortement divergents, chaque défaut de réalisation d'un cycle de stockage ou de purge entraînant un défaut encore plus grand sur le cycle suivant. En outre, ce phénomène de divergence est encore renforcé par le fait que, lorsqu'un besoin de purge est détecté sur une condition de seuil de masse d'oxydes d'azote, la purge ne peut pas toujours démarrer physiquement, ou bien elle doit être empêchée pour des raisons de fiabilité, si plusieurs conditions relatives à des paramètres de fonctionnement du moteur et du véhicule ne sont pas remplies. En d'autres termes il existe un délai d'entrée en purge T, qui est égal à la durée pendant laquelle on attend que lesdites conditions soient satisfaites.

De manière non limitative, ces conditions d'entrée en purge sont les suivantes :

- Le régime du moteur, le couple du moteur, et la vitesse du véhicule sont comprises dans des plages prédéterminées ;
- Les variations ou les dérivées du couple du moteur et de la vitesse du véhicule sont inférieures à des seuils prédéterminés ;
- Le rapport de boîte de vitesses du véhicule est compris dans une plage de rapports prédéterminée ;
- La température de l'atmosphère extérieure est comprise dans une plage prédéterminée ;
- La pression de l'atmosphère extérieure est supérieure à un seuil prédéterminé ;
- La température du carburant est supérieure à un seuil prédéterminé ;
- La température du liquide de refroidissement du moteur est comprise dans une plage prédéterminée ;
- Le moteur ne fonctionne pas sans recirculation des gaz d'échappement à l'admission (ou : la concentration en oxydes d'azote dans les gaz d'échappement est inférieure à un seuil prédéterminé). Ce cas se présente notamment lors d'une purge d'un filtre à particules.

Certains des paramètres qui viennent d'être cités sont à évolution lente. La plupart sont non prévisibles et/ou non modifiables. Par conséquent, il se peut qu'une purge ne puisse pas démarrer dès qu'un seuil de masse d'oxydes d'azote est atteint. Si l'attente se prolonge, la masse stockée d'oxydes d'azote stockée dans le piège augmente. A la fin de la purge, la masse résiduelle d'oxydes d'azote augmente à son tour, ce qui fausse ensuite l'estimation de la masse d'oxydes d'azote au cours du cycle suivant de stockage des oxydes d'azote, etc. Finalement, un début de purge retardé a les mêmes effets que les erreurs d'estimation de la masse d'oxydes d'azote et qu'une fin de purge déclenchée sur un critère de basculement de richesse de la sonde aval, les effets se cumulant.

On connaît aussi de la publication EP-A1-1209332 un procédé de purge d'un piège à oxydes d'azote dans lequel l'arrêt de la purge est anticipé par rapport à un instant prévisionnel de basculement du signal de richesse de la sonde aval du piège. L'objectif du procédé selon cette publication est ce limiter la surconsommation de carburant lors de la phase de purge.

RESUME DE L'INVENTION

L'invention propose de remédier aux défauts des procédés de purge connus. Elle vise à maintenir en permanence l'efficacité de stockage des pièges à un niveau très élevé voisin de l'efficacité maximale, par exemple de l'ordre de 80%.

Pour cela, elle propose un procédé de purge d'un piège à oxydes d'azote, ledit piège étant apte à stocker des oxydes d'azote émis par un moteur à combustion interne de véhicule automobile dans un mode de fonctionnement normal du moteur en mélange pauvre et apte à les réduire sous l'action de carburant du moteur dans un mode de fonctionnement du moteur en mélange riche, ledit procédé comprenant :

- une étape dans laquelle on détecte un besoin de purge du piège lorsque la masse d'oxydes d'azotes $M_{NOx}$ stockée dans le piège atteint un seuil ; et,
- une étape de purge des oxydes d'azote sous l'action de carburant du moteur, débutant après un délai d'entrée en purge consécutif à l'étape de détection du besoin de purge.

La principale caractéristique du procédé est que l'étape de purge peut être réalisée selon aux moins deux modes distincts :

- un premier mode de purge des oxydes d'azote, dans lequel l'étape de purge est arrêtée sur un critère de basculement d'un signal de richesse d'une sonde à oxygène aval du piège, si la durée d'entrée en purge est inférieure à un seuil de durée prédéterminé ; et,
- un deuxième mode de purge renforcée des oxydes d'azote, dans lequel l'étape de purge est arrêtée après une durée de purge prolongée prédéterminée si la durée d'entrée en purge est supérieure audit seuil.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 déjà décrite plus haut représente l'efficacité de stockage d'un piège à oxydes d'azote en fonction de la masse d'oxydes d'azote déjà contenue en son sein ;
- la figure 2 déjà décrite plus haut représente l'évolution temporelle de la masse d'oxydes d'azote dans un piège au cours d'une purge se terminant sur une condition de basculement de richesse de sonde aval, pour une masse initiale de 1 g/l ;
- la figure 3 représente un dispositif de motorisation apte à la mise en oeuvre du procédé selon l'invention ;
- la figure 4 est un organigramme illustrant les différentes étapes d'un procédé de purge selon l'invention ;
- la figure 5 est un graphique représentant l'évolution temporelle de la masse d'oxydes d'azote dans un piège au cours d'une purge interrompue, pour différentes masses initiales ; et,
- la figure 6 est un extrait du graphique selon la figure 5 illustrant l'évolution temporelle de la masse d'oxydes d'azote avec un procédé de purge selon un mode préféré de l'invention.

DESCRIPTION DETAILLEE DES FIGURES

La figure 3 représente schématiquement un dispositif de motorisation pour la mise en oeuvre du procédé selon l'invention. On y a représenté un moteur à combustion interne 1 fonctionnant en mélange pauvre, par exemple un moteur diesel. Le moteur 1 comporte des cylindres 2 (au nombre de quatre sur la figure), dont chacun est alimenté en carburant par un injecteur 3 à partir d'une rampe à carburant 4, et en air provenant d'un collecteur d'admission 5.

Les gaz brûlés, issus de la combustion dans les cylindres 2, sont évacués par l'intermédiaire d'un collecteur d'échappement 6. Ils traversent ensuite un débitmètre 7 apte à déterminer le débit des gaz d'échappement. Ils sont ensuite évacués dans une ligne d'échappement 8, qui comprenant un dispositif catalytique 9 de traitement des gaz d'échappement, une descente d'échappement 10 qui relie le débitmètre 7 au dispositif catalytique 9, et un pot d'échappement 11 par lequel les gaz d'échappement sont évacués dans l'atmosphère extérieure après traitement par le dispositif catalytique 9.

Le dispositif catalytique 9 contient un piège à oxydes d'azote 12. Il peut aussi comporter un dispositif supplémentaire de traitement des gaz d'échappement 13, par exemple un filtre à particules 13 qui permet de traiter les suies émises par la combustion dans le moteur 1. Le piège à oxydes d'azote 12 est équipé d'une sonde de température 14 qui permet de mesurer la température θ du piège 12. Deux sondes à oxygène amont et aval 15, 16 sont montés respectivement à l'entrée et à la sortie du dispositif catalytique 9 (dans le sens de l'écoulement des gaz d'échappement). La sonde à oxygène amont 15 peut être implantée sur la descente d'échappement 10 et la sonde à oxygène aval 16 peut être implantée sur le pot d'échappement 11.

De manière non limitative, le moteur 1 peut être du type suralimenté. Dans ce cas, il peut être associé à un turbocompresseur (non représenté sur la figure 3), et il peut alors comporter au moins un circuit de recirculation partielle des gaz d'échappement à l'admission, par exemple un circuit de recirculation à basse pression et/ou un circuit de recirculation à haute pression (non représentés).

De manière connue, le fonctionnement du moteur 1 est piloté par un calculateur 17. Celui-ci est relié à un certain nombre de capteurs et d'actionneurs, comprenant au moins le débitmètre 7, les injecteurs 3, la sonde de température 14 et les deux sondes à oxygène amont et aval 15,16.

Le calculateur 17 comprend des moyens de détermination de la richesse r du mélange carburant / air, et de réglage de ladite richesse en ajustant le débit de carburant $Q_{carb}$ injecté par rapport à un débit d'air admis $Q_{adm}$. Le débit d'air admis peut être calculé à partir du débit des gaz d'échappement $Q_{ech}$ mesuré par le débitmètre 7 et du débit de carburant $Q_{carb}$ par un principe de conservation de la masse.

Quand la richesse r est inférieure à 1, c'est-à-dire quand le débit d'air $Q_{adm}$ est en excès par rapport au débit de carburant $Q_{carb}$ relativement aux proportions stoechiométriques, le piège 12 stocke une partie des molécules d'oxydes d'azote issues de la combustion dans le moteur 1.

Le calculateur 17 comprend des moyens aptes à détecter un besoin de purge du piège 12 lorsque la masse d'oxydes d'azote stockée en son sein atteint un seuil donné. Il est apte à estimer de manière continue la masse d'oxydes d'azote qui s'y accumule.

Pour ce faire, le calculateur peut estimer à chaque instant la concentration en $NO_x$ à l'entrée $[NO_x]_{in}$ du dispositif catalytique 9 à partir d'une cartographie, en fonction du point de fonctionnement du moteur 1. Un tel point de fonctionnement dépend de différents paramètres comportant au moins le régime de rotation N du moteur 1, une consigne de couple C qui est par exemple obtenue à partir de l'enfoncement de la pédale d'accélérateur du véhicule par le conducteur, et une valeur représentative de la température $\theta_{mot}$ du moteur, par exemple la température d'huile ou la température d'eau. La cartographie de concentration en $NO_x$ en fonction du point de fonctionnement du moteur 1 peut être établie au préalable au banc d'essais, en faisant un balayage de paramètres. Elle est ensuite stockée dans la mémoire du calculateur 17 du moteur 1. Lors du fonctionnement du véhicule, la concentration en $NO_x$ à l'entrée $[NO_x]_{in}$ du dispositif catalytique 9 est déterminée grâce à cette cartographie en fonction des paramètres du point de fonctionnement courant du moteur 1.

Le calculateur peut d'autre part estimer à chaque instant l'efficacité de stockage $\varepsilon_{stock}$ du piège 12. Celle-ci est une fonction : de la température $\theta$ du piège 12 (mesurée par le capteur 14) ; du débit de gaz d'échappement $Q_{ech}$ traversant le piège 12 (mesuré par le débitmètre 7) ; de la concentration en oxydes d'azote $[NO_x]_{in}$ à l'entrée du dispositif catalytique 9 (estimée comme indiquée précédemment) ; de la richesse r (calculée à partir des débits d'air et de carburant ou mesurée par la sonde à oxygène amont 15) ; et, de la masse d'oxydes d'azote $M_{NOx}$ déjà stockée dans le piège 12. Cette cartographie peut également être prédéfinie par des essais au banc moteur.

Le calculateur peut alors, de manière non limitative, déterminer la masse d'oxydes d'azote de manière itérative selon l'équation 1 :

$$(Eq.1) \quad M_{NOx}(t+\Delta t) = M_{NOx}(t) + [\ Q_{ech}(t+\Delta t) * [NO_x]_{in}(t+\Delta t) * \varepsilon_{stock}(t)\ ]* \Delta t$$

La masse d'oxydes d'azote est initialisée à une valeur $M_{NOx}(0)$ égale à 0 à l'instant t=0 où une purge du piège 12 est terminée. Cette valeur permet de déduire la première valeur de l'efficacité $\varepsilon_{stock}(0)$, que l'on introduit dans l'équation 1 pour déterminer la masse d'oxydes d'azote $M_{NOx}$ à l'instant t = 0+$\Delta t$. Par itérations successives, on peut ainsi déterminer la masse d'oxydes d'azote présente dans le piège 12 à chaque instant t.

Le calculateur comprend des moyens aptes à comparer cette masse courante d'oxydes d'azote dans le piège 12 avec un seuil de masse $M_s$. De préférence, le seuil de masse est au plus égal à 0,5 g/l. Il est par exemple compris entre 0,3 g/l et 0,5 g/l. Lorsque le seuil est atteint, le calculateur identifie un besoin de purge

Le calculateur comprend aussi des moyens aptes à déterminer un ensemble de valeurs de paramètres de fonctionnement du moteur et du véhicule comprenant, de manière non limitative :

- Le régime du moteur, le couple du moteur, et la vitesse du véhicule ;
- Les variations ou les dérivées du couple du moteur et de la vitesse du véhicule (calculables à partir des couples et vitesse à deux instants successifs séparés d'un pas de temps $\Delta t$) ;
- Le rapport de boîte de vitesses du véhicule ;
- La température de l'atmosphère extérieure ;
- La pression de l'atmosphère extérieure ;
- La température du carburant ;
- La température du liquide de refroidissement du moteur ;
- La concentration en oxydes d'azote dans les gaz d'échappement. Si le moteur est du type suralimenté avec au moins une boucle de recirculation partielle des gaz d'échappement à l'admission, on peut en variante surveiller le taux de recirculation (taux d'EGR).

Le calculateur comprend des moyens aptes à vérifier si les conditions suivantes d'entrée en purge sont remplies :

- Le régime du moteur, le couple du moteur et la vitesse du véhicule sont dans des plages prédéterminées ;
- Le couple du moteur et la vitesse du véhicule sont stables, i.e. les variations ou les dérivées du couple et de la vitesse du véhicule sont inférieures à des seuils de variation de couple et de variation de vitesse prédéterminés ;
- Le rapport de boîte de vitesses du véhicule est compris dans une plage de rapports prédéterminée ;
- La température de l'atmosphère extérieure est comprise dans une plage prédéterminée ;
- La pression de l'atmosphère extérieure est supérieure à un seuil prédéterminé ;
- La température du carburant est supérieure à un seuil prédéterminé ;
- La température du liquide de refroidissement du moteur est comprise dans une plage prédéterminée ;
- La concentration en oxydes d'azote dans les gaz d'échappement est inférieure à un seuil prédéterminé. En variante, on peut vérifier qu'un moteur suralimenté ayant au moins une boucle de recirculation partielle des gaz d'échappement à l'admission ne fonctionne pas sans aucune recirculation.

Le calculateur comprend des moyens aptes à basculer le fonctionnement du moteur lorsque lesdites conditions d'entrée en purge sont remplies. Le basculement du fonctionnement du moteur 1 se fait à une richesse r supérieure à 1, c'est-à-dire avec un excès de débit de carburant $Q_{carb}$ par rapport au débit d'air $Q_{air}$. Les molécules de $NO_x$ réagissent dans le piège 12 avec les réducteurs (hydrocarbures imbrûlés) contenus dans les gaz d'échappement et sont réduites en molécules inoffensives. Typiquement, la richesse du mélange est réglée à une valeur comprise entre 1,03 et 1,10 , par exemple 1,04.

Le calculateur comprend des moyens aptes à déterminer le délai d'entrée en purge T, c'est-à-dire la durée T écoulée entre le moment où un besoin de purge est identifié et le moment où les conditions d'entrée en purge sont remplies. Il comprend aussi des moyens aptes à comparer ledit délai d'entrée en purge T avec un seuil de durée $T_s$ .

Le calculateur comprend des moyens aptes à adapter la fin de la purge en fonction du délai d'entrée en purge T écoulé.

Plus précisément, il comprend des moyens aptes à arrêter la purge lorsque la sonde à oxygène aval 16 mesure une richesse qui rejoint celle de la sonde à oxygène amont 15, par exemple 1,04, dans le cas où le délai d'entrée en purge T est inférieur au seuil de durée Ts . Le calculateur comprend aussi des moyens aptes à maintenir la purge pendant une durée prolongée prédéterminée, dans le cas où le délai d'entrée en purge T est supérieur au seuil de durée $T_s$ . Ladite durée de purge prolongée est choisie de manière à pouvoir purger entièrement un piège ayant atteint une masse d'oxydes d'azote prédéterminée, de préférence celle qui correspond à sa capacité maximale de stockage. Par purger entièrement, on entend que la masse résiduelle d'oxydes d'azote dans le piège à la fin de la purge est inférieure à un seuil très bas, par exemple au plus 0,2 g/l. La durée de purge prolongée peut être prédéterminée par des essais préalables dans lesquels les masses d'oxydes d'azote sont mesurées de manière précise, par exemple par pesée ou par caractérisations sur banc à gaz synthétiques.

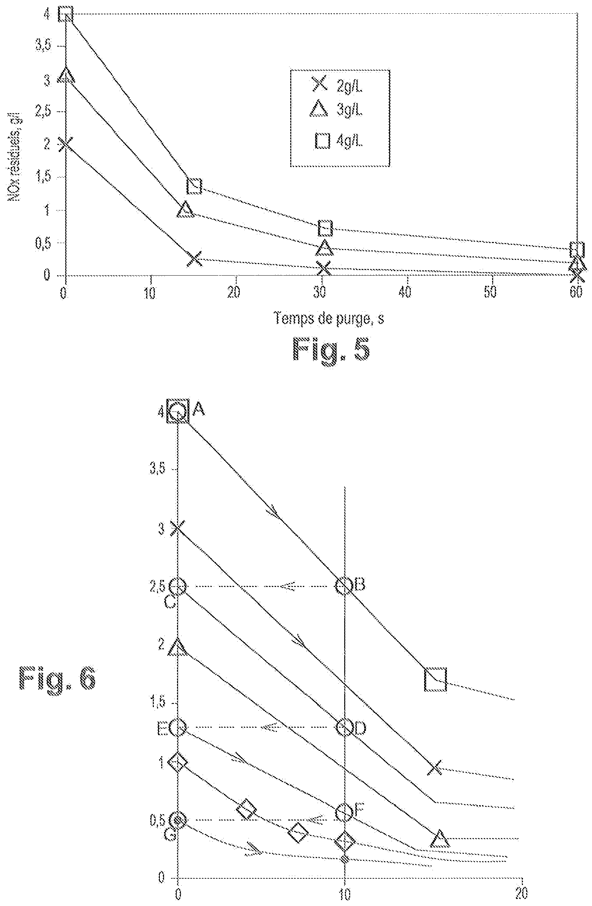

Dans un mode préféré de l'invention, le calculateur comprend en outre des moyens aptes à alterner des cycles individuels de purge en mélange riche et de refroidissement du piège en mélange pauvre pendant la durée prolongée prédéterminée indiquée précédemment. Ce mode est particulièrement avantageux parce-qu'il permet d'accélérer la purge et de vider plus complètement le piège qu'une purge continue (voir plus loin la figure 6).

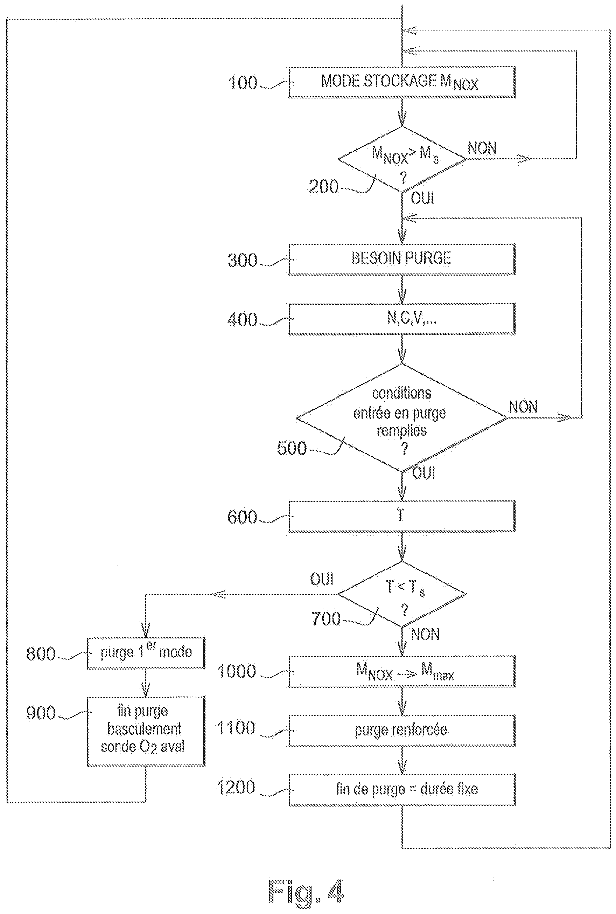

La figure 4 illustre les étapes du procédé selon l'invention dans un mode de réalisation non limitatif de celui-ci.

Le procédé de purge est précédé par une étape 100 de fonctionnement du moteur dans son mode normal de stockage des oxydes d'azote, en mélange pauvre. Au cours de cette étape 100, on détermine en continu la masse $M_{NOx}$ d'oxydes d'azote dans le piège 12. Cette étape 100 est suivie d'une étape 200 de comparaison de ladite masse avec le seuil de masse $M_s$ .

Le procédé de purge proprement dit débute lorsque ladite masse atteint ledit seuil de masse. Alors, à une étape 300, le procédé de purge détecte un besoin de purge. Avantageusement, le seuil de masse $M_s$ est inférieur à 0,5 g/l. Il est par exemple compris entre 0,3 g/l et 0,5 g/l.

Le procédé se poursuit, de manière itérative, par une étape 400 de détermination d'un ensemble de paramètres de fonctionnement, comprenant de manière non limitative :

- Le régime du moteur, le couple du moteur, et la vitesse du véhicule ;
- Les variations ou les dérivées du couple du moteur et de la vitesse du véhicule (calculables à partir des couples et vitesse à deux instants successifs séparés d'un pas de temps $\Delta t$) ;
- Le rapport de boîte de vitesses du véhicule ;
- La température de l'atmosphère extérieure ;
- La pression de l'atmosphère extérieure ;
- La température du carburant ;
- La température du liquide de refroidissement du moteur ;
- La concentration en oxydes d'azote dans les gaz d'échappement. Si le moteur est du type suralimenté avec au moins une boucle de recirculation partielle des gaz d'échappement à l'admission, on peut en variante surveiller le taux de recirculation (taux d'EGR).

Le procédé se poursuit par une étape 500 dans laquelle on vérifie si les conditions d'entrée en purge suivantes sont remplies :

- Le régime du moteur, le couple du moteur et la vitesse du véhicule sont dans des plages prédéterminées ;
- Le couple du moteur et la vitesse du véhicule sont stables, i.e. les variations ou les dérivées du couple et de la vitesse du véhicule sont inférieures à des seuils de variation de couple et de variation de vitesse prédéterminés ;
- Le rapport de boîte de vitesses du véhicule est compris dans une plage de rapports prédéterminée ;
- La température de l'atmosphère extérieure est comprise dans une plage prédéterminée ;
- La pression de l'atmosphère extérieure est supérieure à un seuil prédéterminé ;
- La température du carburant est supérieure à un seuil prédéterminé ;
- La température du liquide de refroidissement du moteur est comprise dans une plage prédéterminée ;
- La concentration en oxydes d'azote dans les gaz d'échappement est inférieure à un seuil prédéterminé. En variante, on peut vérifier qu'un moteur suralimenté ayant au moins une boucle de recirculation partielle des gaz d'échappement à l'admission ne fonctionne pas sans aucune recirculation.

Tant que toutes ces conditions ne sont pas remplies cumulativement, le procédé reprend à l'étape 400. Quand les conditions sont réunies, le procédé oriente vers une étape 600 de détermination du délai d'entrée en purge T, qui est égal à la durée écoulée entre la détection du besoin de la purge à l'étape 300 et le moment où les conditions de purge ont été remplies. Le procédé se poursuit par une étape de comparaison 700 du délai d'entrée en purge T avec le seuil de durée $T_s$ .

Si ledit temps d'attente est inférieur audit seuil de durée, le procédé oriente vers une étape de purge classique du piège, c'est-à-dire un premier mode de purge qui est réalisée de manière continue en mélange riche, la richesse étant constamment maintenue à une valeur comprise par exemple entre 1,03 et 1,10 et qui s'arrête à l'étape 900 lorsque le signal de la sonde aval 16 mesure une richesse qui rejoint celle de la sonde à oxygène amont 15, par exemple 1,04.

Dans le cas contraire, le procédé oriente vers une étape de purge renforcée du piège. Dans une première étape 1000, il remplace dans une mémoire la masse déterminée à l'étape 100 par une masse prédéterminée $M_{max}$ supérieure au seuil de masse $M_s$ . Il s'agit de préférence de la capacité maximale de stockage du piège 12, par exemple environ 4 g/l. En variante, on peut prendre une masse prédéterminée plus faible, par exemple 2 g/l, si on accepte un léger risque de moindre efficacité de la purge renforcée proprement dite, qui se déroule à l'étape 1100. Au cours de cette étape de purge renforcée, on purge le piège 12 sans tenir compte du basculement de la sonde à oxygène aval. Plus précisément, on arrête la purge (à l'étape 1200) seulement après l'écoulement d'une durée prédéterminée, dite durée de purge prolongée, qui est choisie de manière à pouvoir purger entièrement un piège ayant atteint la masse prédéterminée $M_{max}$ , de préférence celle qui correspond à sa capacité maximale de stockage. Par purger entièrement, on entend que la masse résiduelle d'oxydes d'azote dans le piège à la fin de la purge est inférieure à un seuil très bas, par exemple 0,2 g/l.

La figure 5 permet d'illustrer l'évolution de la masse d'oxydes d'azote dans un piège qui résulte de l'application de ce procédé de purge. Cette figure est un graphique qui représente l'évolution temporelle de la masse d'oxydes d'azote au cours d'une purge ininterrompue, pour différentes masses initiales dans le piège.

Par exemple, pour une masse prédéterminée $M_{max}$ correspondant à la capacité maximale de stockage du piège, ici 4 g/l, la durée prédéterminée doit être de 60 secondes pour que la masse résiduelle d'oxydes d'azote en fin de purge soit inférieure à 0,5 g/l. La masse d'oxydes d'azote dans le piège diminue de moins en moins vite à mesure que la température du piège augmente au-dessus d'un certain seuil, typiquement de l'ordre de 350°C, à partir duquel le rendement de la réduction est décroissant. Ainsi, pour une masse prédéterminée $M_{max}$ de 4 g/l, la durée prédéterminée pour vider le piège (c'est-à-dire pour atteindre un seuil très bas, par exemple 0,2 g/l), non visible sur la figure 5, est de l'ordre de quelques minutes.

Bien entendu, si on se limite à une durée prédéterminée de purge de 60 secondes, le piège sera néanmoins vidé dans la plupart des cas. En effet, la masse réelle d'oxydes d'azote contenue dans le piège au début de la purge est en réalité toujours inférieure à la masse prédéterminée $M_{max}$ . Par exemple, si la masse initiale est en réalité égale à 3 g/l, la masse résiduelle dans le piège après 60 secondes de purge est de l'ordre de 0,2 g/l. Si, dans un autre exemple, la masse initiale est de 2 g/l, la masse résiduelle dans le piège après 60 secondes de purge est inférieure à 0,1 g. Néanmoins, il y a un risque, notamment dans les cas où le délai d'entrée en purge T a été long, que certains pièges commencent à présenter des masses d'oxydes d'azote résiduelles de l'ordre de 0,5 g/l si la durée prédéterminée est limitée à 60 secondes.

Dans un mode préféré de l'invention, on peut vider le piège jusqu'à un seuil encore inférieur à 0,2 g/l, par exemple un seuil indétectable inférieur à 0,1 g/l, tout en limitant la durée de la purge.

Pour cela, on remplace la purge renforcée continue de l'étape 1000 par une purge renforcée qui consiste en une alternance de cycles individuels de purge en mélange riche et de refroidissement du piège en mélange pauvre pendant la durée prolongée prédéterminée indiquée précédemment. Un exemple de ce mode est illustré par la figure 6.

La figure 6 est un extrait du graphique selon la figure 5 illustrant l'évolution temporelle de la masse d'oxydes d'azote avec un procédé de purge selon ce mode préféré de l'invention. On y a ajouté des courbes supplémentaires correspondant à d'autres masses initiales d'oxydes d'azote.

Dans le mode préféré de l'invention, la purge renforcée commence par un premier cycle de purge en mélange riche, par exemple d'une durée de 10 secondes. La masse d'oxydes d'azote diminue en passant du point A au point B sur la figure, c'est-à-dire qu'elle est sensiblement égale à 2,5 g/l. Puis, on lance un cycle de fonctionnement du moteur en mélange pauvre, de manière à refroidir le piège 12. Ce cycle d'une durée très courte par rapport au cycle de purge permet de refroidir le piège jusqu'à la température qu'il avait au début de premier cycle de purge, par exemple 250°C sur les figures 5 et 6. On reprend alors un deuxième cycle de purge en mode riche de 10 secondes. Le piège est au départ dans les conditions de purge correspondant au point C de la figure, et la masse diminue en passant du point C au point D. On voit que grâce au très court cycle intermédiaire de refroidissement, la masse atteint maintenant 1,25 g/l. En répétant un nouveau cycle de refroidissement et un nouveau cycle de purge de 10 secondes, la masse passe du point E au point F de la figure. Le point F correspond à une masse résiduelle qui n'est plus que de 0,5 g/l. Cette masse résiduelle est atteinte en un peu plus de 30 secondes, alors que 60 secondes sont nécessaires dans le cas d'une purge continue.

En ajoutant un troisième cycle de refroidissement puis un quatrième cycle de purge de 10 secondes, la masse passe du point G au point H sur la figure, c'est-à-dire qu'elle atteint une valeur de l'ordre de 0,1 g/l. On peut encore procéder à des cycles successifs supplémentaires de refroidissement et de purge, de manière à atteindre une masse indétectable. Par exemple, on peut prévoir une succession de 12 cycles.

Bien entendu, l'invention n'est pas limitée aux modes de réalisation qui viennent d'être décrits. On pourra en particulier adapter la durée et le nombre des cycles de purge dans le mode préféré de purge renforcée.

Ainsi, le procédé de purge selon l'invention, grâce au mode de purge renforcé qu'il propose, permet d'éliminer les risques de perte d'efficacité des pièges à oxydes d'azote. Il est particulièrement avantageux dans le cadre des futures législations qui entraîneront la multiplication du nombre des purges.

## Revendications

1. Procédé de purge d'un piège à oxydes d'azote (12), ledit piège étant apte à stocker des oxydes d'azote émis par un moteur (1) à combustion interne de véhicule automobile dans un mode de fonctionnement normal du moteur en mélange pauvre et apte à les réduire sous l'action de carburant du moteur (1) dans un mode de fonctionnement du moteur (1) en mélange riche, ledit procédé comprenant :

   - une étape (300) dans laquelle on détecte un besoin de purge du piège (12) lorsque la masse d'oxydes d'azotes ($M_{NOx}$) stockée dans le piège atteint un seuil ($M_s$) ; et,
   - une étape (800,1100) de purge des oxydes d'azote sous l'action de carburant du moteur, débutant après un délai d'entrée en purge (T) consécutif à l'étape (300) de détection du besoin de purge ;

   **CARACTERISE EN CE QUE** l'étape de purge (800,1100) peut être réalisée selon aux moins deux modes distincts :

   - un premier mode de purge des oxydes d'azote, dans lequel l'étape de purge (800) est arrêtée sur un critère de basculement d'un signal de richesse d'une sonde à oxygène aval (16) du piège (12), si le délai d'entrée en purge (T) est inférieur à un seuil de durée ($T_s$) prédéterminé ; et,
   - un deuxième mode de purge renforcée des oxydes d'azote, dans lequel l'étape de purge (1100) est arrêtée après une durée de purge prolongée prédéterminée si le délai d'entrée en purge (T) est supérieur audit seuil ($T_s$).

2. Procédé selon la revendication 1, **caractérisé en ce que** le seuil ($M_s$) de masse pour la détection d'un besoin de purge est inférieur à 0,5 gramme par litre, ramené au volume du piège.

3. Procédé selon l'une des revendications 1 ou 2, **caractérisé en ce que** la durée de purge prolongée prédéterminée du deuxième mode de purge est apte à purger une masse d'oxydes d'azote prédéterminée ($M_{max}$) supérieure au seuil de masse ($M_s$) servant à détecter un besoin de purge.

4. Procédé selon la revendication 3, **caractérisé en ce que** la masse d'oxydes d'azote prédéterminée ($M_{max}$) apte à être purgée au cours de la durée de purge prolongée prédéterminée du deuxième mode de purge est égale à la capacité maximale de stockage des oxydes d'azote du piège (12).

**5.** Procédé selon l'une des revendications 3 ou 4, **caractérisé en ce que** la masse d'oxydes d'azote prédéterminée ($M_{max}$) est sensiblement égale à 4 grammes par litre, ramenée au volume du piège.

**6.** Procédé selon l'une quelconque des revendications précédentes, **caractérisé en ce que** le délai d'entrée en purge (T) commence au moment où un besoin de purge du piège est détecté, et se termine au moment où un ensemble de conditions d'entrée en purge sont remplies, les conditions consistant à au moins vérifier que :

- le régime du moteur (N), le couple du moteur (C) et la vitesse du véhicule sont dans des plages prédéterminées ;
- la variation du couple du moteur et la variation de la vitesse du véhicule sont inférieures à des seuils prédéterminés ;
- le rapport de boîte de vitesses du véhicule est compris dans une plage de rapports prédéterminée ;
- la température de l'atmosphère extérieure est comprise dans une plage prédéterminée ;
- la pression de l'atmosphère extérieure est supérieure à un seuil prédéterminé ;
- la température du carburant est supérieure à un seuil prédéterminé ; et,
- la température du liquide de refroidissement du moteur est comprise dans une plage prédéterminée.

**7.** Procédé selon l'une quelconque des revendications précédentes, **caractérisé en ce que** dans le deuxième mode de purge renforcée, la purge du piège (1100) est réalisée par une étape unique de basculement du fonctionnement du moteur en mélange riche.

**8.** Procédé selon l'une quelconque des revendications 1 à 6, **caractérisé en ce que** dans le deuxième mode de purge renforcée, la purge du piège (1100) est réalisée par une alternance de cycles individuels de basculement du fonctionnement du moteur en mélange riche et de cycles individuels de refroidissement du piège.

**9.** Procédé selon la revendication 7, **caractérisé en ce que** le refroidissement du piège est obtenu en basculant le fonctionnement du moteur en mélange pauvre.

**10.** Procédé selon la revendication 7 ou 8, **caractérisé en ce que** la durée des cycles individuels de basculement du fonctionnement du moteur en mélange riche est sensiblement égale à 10 secondes.

**Patentansprüche**

**1.** Verfahren zum Entfernen aus einer Stickoxidfalle (12), wobei die Falle geeignet ist, Stickoxide, die durch einen Verbrennungsmotor (1) eines Kraftfahrzeugs in einem normalen Betriebsmodus des Motors emittiert werden, in einem armen Gemisch zu speichern, und geeignet ist, diese unter Einwirkung von Kraftstoff des Motors (1) in einem Betriebsmodus des Motors (1) in einem fetten Gemisch zu verringern, wobei das Verfahren umfasst:

- einen Schritt (300), in dem eine Notwendigkeit zum Entfernen aus der Falle (12) erkannt wird, wenn die Masse ($M_{NOx}$) der Stickoxide, die in der Falle gespeichert sind, einen Schwellenwert ($M_s$) erreicht; und
- einen Schritt (800, 1100) zum Entfernen der Stickoxide unter Einwirkung von Kraftstoff des Motors, beginnend nach einer Entfernungseintrittsverzögerung (T), die auf den Schritt (300) zum Erkennen der Notwendigkeit des Entfernens folgt;

**dadurch gekennzeichnet, dass** der Entfernungsschritt (800,1100) gemäß mindestens zwei unterschiedlichen Modi durchgeführt werden kann:

- einen ersten Modus zum Entfernen von Stickoxiden, bei dem der Entfernungsschritt (800) auf ein Kriterium eines Umschaltens eines Anreicherungssignals von einer stromabwärts gelegenen Sauerstoffsonde (16) der Falle (12) hin gestoppt wird, wenn die Entfernungseintrittsverzögerung (T) kleiner als ein vorbestimmter Dauerschwellenwert ($T_s$) ist; und
- einen zweiten Modus des verstärkten Entfernens von Stickoxiden, bei dem der Entfernungsschritt (1100) nach einer vorbestimmten verlängerten Entfernungsdauer gestoppt wird, wenn die Entfernungseintrittsverzögerung (T) größer als der Schwellenwert ($T_s$) ist.

**2.** Verfahren nach Anspruch 1, **dadurch gekennzeichnet, dass** der Massenschwellenwert ($M_s$) für die Erkennung einer Notwendigkeit des Entfernens weniger als 0,5 Gramm pro Liter, bezogen auf das Volumen der Falle, beträgt.

**3.** Verfahren nach einem der Ansprüche 1 oder 2, **dadurch gekennzeichnet, dass** die vorbestimmte verlängerte Entfernungsdauer des zweiten Entfernungsmodus geeignet ist, eine vorbestimmte Masse ($M_{max}$) an Stickoxiden zu entfernen, die größer als der Massenschwellenwert ($M_s$) ist, der zum Erkennen einer Notwendigkeit des Entfernens dient.

**4.** Verfahren nach Anspruch 3, **dadurch gekennzeichnet, dass** die vorbestimmte Masse ($M_{max}$) an Stickoxiden, die geeignet ist, während der vorbestimmten verlängerten Entfernungsdauer des zweiten Entfernungsmodus entfernt zu werden, gleich der maximalen Speicherkapazität der Stickoxide der Falle (12) ist.

**5.** Verfahren nach einem der Ansprüche 3 oder 4, **dadurch gekennzeichnet, dass** die vorbestimmte Masse ($M_{max}$) an Stickoxiden im Wesentlichen gleich 4 Gramm pro Liter, bezogen auf das Volumen der Falle, beträgt.

**6.** Verfahren nach einem der vorstehenden Ansprüche, **dadurch gekennzeichnet, dass** die Entfernungseintrittsverzögerung (T) in dem Moment beginnt, in dem eine Notwendigkeit zum Entfernen aus der Falle erkannt wird, und in dem Moment endet, in dem eine Reihe von Eintrittsbedingungen für das Entfernen erfüllt sind, wobei die Bedingungen darin bestehen, mindestens zu überprüfen, dass:

- die Motordrehzahl (N), das Motordrehmoment (C) und die Fahrzeuggeschwindigkeit innerhalb vorbestimmter Bereiche liegen;
- die Schwankung des Motordrehmoments und die Schwankung der Fahrzeuggeschwindigkeit unter vorbestimmten Schwellenwerten liegen;
- das Getriebeverhältnis des Fahrzeugs innerhalb eines vorbestimmten Verhältnisbereichs liegt;
- die Temperatur der Außenatmosphäre innerhalb eines vorbestimmten Bereichs liegt;
- der Druck der Außenatmosphäre über einem vorbestimmten Schwellenwert liegt;
- die Kraftstofftemperatur über einem vorbestimmten Schwellenwert liegt; und - die Temperatur des Motorkühlmittels innerhalb eines vorbestimmten Bereichs liegt.

**7.** Verfahren nach einem der vorstehenden Ansprüche, **dadurch gekennzeichnet, dass** in dem zweiten verstärkten Entfernungsmodus die Entfernung aus der Falle (1100) durch einen einzigen Schritt des Umschaltens des Motorbetriebs auf ein fettes Gemisch erfolgt.

**8.** Verfahren nach einem der Ansprüche 1 bis 6, **dadurch gekennzeichnet, dass** in dem zweiten verstärkten Entfernungsmodus die Entfernung aus der Falle (1100) durch einen Wechsel einzelner Zyklen des Umschaltens des Motorbetriebs auf ein fettes Gemisch und einzelne Fallenkühlzyklen erfolgt.

**9.** Verfahren nach Anspruch 7, **dadurch gekennzeichnet, dass** das Kühlen der Falle bei Umschalten des Motorbetriebs auf ein mageres Gemisch erlangt wird.

**10.** Verfahren nach Anspruch 7 oder 8, **dadurch gekennzeichnet, dass** die Dauer der einzelnen Zyklen des Umschaltens des Motorbetriebs auf ein fettes Gemisch im Wesentlichen gleich 10 Sekunden beträgt.

**Claims**

**1.** Method for purging a nitrogen oxide trap (12), the trap being suitable for storing nitrogen oxides emitted by a motor vehicle internal combustion engine (1) in a normal lean-burn operating mode of the engine and being suitable for reducing nitrogen oxides under the action of fuel from the engine (1) in a rich-burn operating mode of the engine (1), the method comprising:

- a step (300) in which a need for purging the trap (12) is detected when the mass of nitrogen oxides ($M_{NOx}$) stored in the trap reaches a threshold ($M_s$); and
- a step (800, 1100) of purging nitrogen oxides under the action of fuel from the engine, starting after a purging entry delay (T) following the step (300) of detecting the need for purging;

**CHARACTERIZED IN THAT** the purging step (800, 1100) can be performed in at least two separate modes:

- a first mode of purging nitrogen oxides, in which the purging step (800) is stopped on a criterion of switching a richness signal from a downstream oxygen sensor (16) of the trap (12) if the purge entry delay (T) is less than a predetermined time threshold ($T_s$); and,
- a second, enhanced mode of purging nitrogen oxides, in which the purging step (1100) is stopped after a predetermined extended purging time if the purging entry delay (T) is greater than the threshold ($T_s$).

2. Method according to claim 1, **characterized in that** the mass threshold ($M_s$) for detecting a need for purging is less than 0.5 grams per liter, based on the volume of the trap.

3. Method according to either of claims 1 or 2, **characterized in that** the predetermined extended purging time of the second purging mode is suitable for purging a predetermined mass ($M_{max}$) of nitrogen oxides that is greater than the mass threshold ($M_s$) used to detect a need for purging.

4. Method according to claim 3, **characterized in that** the predetermined mass ($M_{max}$) of nitrogen oxides suitable for being purged during the predetermined extended purging time of the second purging mode is equal to the maximum nitrogen oxide storage capacity of the trap (12).

5. Method according to either of claims 3 or 4, **characterized in that** the predetermined mass ($M_{max}$) of nitrogen oxides is substantially equal to 4 grams per liter, based on the volume of the trap.

6. Method according to any of the preceding claims, **characterized in that** the purging entry delay (T) begins at the moment when a need for purging the trap is detected and ends at the moment when a set of purging entry conditions are met, the conditions consisting in at least verifying that:

- the engine speed (N), the engine torque (C) and the vehicle speed are within predetermined ranges;
- the variation in the engine torque and the variation in the vehicle speed are below predetermined thresholds;
- the transmission ratio of the vehicle is within a predetermined ratio range;
- the temperature of the outside atmosphere is within a predetermined range;
- the pressure of the outside atmosphere is greater than a predetermined threshold;
- the fuel temperature is greater than a predetermined threshold; and
- the engine coolant temperature is within a predetermined range.

7. Method according to any of the preceding claims, **characterized in that,** in the second enhanced purging mode, the trap is purged (1100) by a single step of switching the engine operation to rich-burn.

8. Method according to any of claims 1 to 6, **characterized in that,** in the second enhanced purging mode, the trap is purged (1100) by alternating individual cycles of switching the engine operation to rich-burn and individual cycles of cooling the trap.

9. Method according to claim 7, **characterized in that** the trap is cooled by switching the engine operation to lean-burn.

10. Method according to claim 7 or 8, **characterized in that** the time of the individual cycles of switching the engine operation to rich-burn is substantially equal to 10 seconds.

Fig. 1

Fig. 2

Fig. 3

Fig. 4

NOx résiduels, g/l

| × 2g/L
| △ 3g/L
| □ 4g/L

Temps de purge, s

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916017 A1
- FR 2866926 A1
- EP 1209332 A1